# EUROPÄISCHE PATENTSCHRIFT

(11) **EP 1 381 781 B1**
(45) Veröffentlichungstag und Bekanntmachung des Hinweises auf die Patenterteilung: **06.10.2004**
(21) Anmeldenummer: 02737951.0
(22) Anmeldetag: 12.04.2002
(51) Int. Cl.: F15B 15/28

(54) **DRUCKMITTELZYLINDER MIT EINEM MESSSYSTEM ZUR BESTIMMUNG DER ABSOLUTPOSITION DER KOLBENSTANGE BEZÜGLICH EINES BEZUGSPUNKT**
HYDRAULIC CYLINDER WITH A MEASURING SYSTEM FOR DETERMINING THE ABSOLUTE POSITION OF THE PISTON ROD RELATIVE TO A REFERENCE POINT
CYLINDRE DE PRESSION COMPRENANT UN SYSTEME DE MESURE POUR DETERMINER LA POSITION ABSOLUE D'UNE TIGE DE PISTON PAR RAPPORT A UN POINT DE REFERENCE

(30) Priorität: 23.04.2001 DE 10119941
(43) Veröffentlichungstag der Anmeldung: 21.01.2004
(73) Patentinhaber: Bosch Rexroth AG, 70184 Stuttgart (DE)
(72) Erfinder: YMKER, Leo, NL-5345 TJ Oss (NL)
(86) Internationale Anmeldenummer: PCT/EP2002/004096
(87) Internationale Veröffentlichungsnummer: WO 2002/086330

(56) Entgegenhaltungen:
- EP-A- 0 618 373
- DE-A- 4 205 048
- FR-A- 2 795 509
- US-A- 3 956 973

## Beschreibung

Die Erfindung betrifft einen Druckmittelzylinder mit einem Meßsystem zur Bestimmung der Position der Kolbenstange relativ zu einem Bezugspunkt und mit den weiteren Merkmalen aus dem Oberbegriff des Patentanspruchs 1.

Ein solcher Druckmittelzylinder ist aus der EP 0 618 373 B1 bekannt. Das Meßsystem zur Positionsbestimmung ist dort so ausgelegt, daß nur ein Relativposition, also nur eine Wegstrecke erfaßt werden kann, ohne die absolute Position der Kolbenstange erkennen zu können. Die Kolbenstange des bekannten Druckmittelzylinders besitzt eine regelmäßige Codespur von aufeinanderfolgenden Codeelementen unterschiedlicher binärer Zustände, die durch umlaufende Nuten bestimmter Breite und durch umlaufende und die gleiche Breite wie die Nuten aufweisende Plateaus zwischen zwei Nuten gebildet sind. Um die im Grundmaterial aus Stahl bestehende Kolbenstange zu schützen und eine glatte Oberfläche zu erhalten, ist auf das Grundmaterial eine dünne keramische Schicht aufgebracht, die durch Schleifen und Honen endbearbeitet ist.

Das Meßsystem ist eines auf der Basis eines galvanomagnetischen Effekts und besitzt ortsfest zum Gehäuse des Druckmittelzylinders einen ein Magnetfeld erzeugenden Dauermagneten und zwei magnetoresistive Sensorelemente, die sich zwischen dem Dauermagneten und der Kolbenstange befinden und die beim Verfahren der Kolbenstange aufgrund der sich an ihnen vorbeibewegenden Nuten und Plateaus wechselnden Magnetfeldstärken ausgesetzt sind und dementsprechend eine Folge von wechselnden Ausgangssignalen abgeben. Es sind zwei Sensorelemente vorhanden, die in Längsrichtung der Kolbenstange einen Abstand voneinander haben, der gleich einem ganzzahligen Vielfachen der Teilung der Codespur plus oder minus einem Viertel der Teilung ist, so daß eine hohe Auflösung möglich ist.

Der Erfindung liegt die Aufgabe zugrunde, einen Druckmittelzylinder, der die Merkmale aus dem Oberbegriff des Patentanspruchs 1 aufweist, so weiterzuentwickeln, daß eine Bestimmung der Absolutposition möglich ist, wobei der Aufwand für die Herstellung begrenzt bleibt und eine sichere Funktion über eine lange Lebensdauer gewährleistet werden kann.

Das angestrebte Ziel läßt sich bei einem gattungsgemäßen Druckmittelzylinder nach der Erfindung dadurch erreichen, daß, wie dies im kennzeichnenden Teil des Patentanspruchs 1 angegeben ist, zur Bestimmung der Absolutposition der Kolbenstange die Codeelemente in der Codespur auf der Kolbenstange in einem irregulären Muster angeordnet sind, das für verschiedene Positionen der Kolbenstange jeweils ein einzigartiges Muster der Ausgangssignale der Sensorelemente erzeugt und daß die Nuten und Plateaus in der Kolbenstange zumindest in weiten Bereichen einen Manchester Code bilden, bei dem höchstens zwei Codeelemente gleichen Zustands aufeinander folgen. Durch die Verwendung eines Manchester Codes ist sichergestellt, daß der Durchmesser des Grundmaterials der Kolbenstange, über begrenzte Strecken ermittelt, über die gesamte Länge der Codespur im wesentlichen gleich ist. Dies führt zu einer gleichmäßigen Struktur der Schutzschicht, bei der es sich meist um eine durch Flammspritzen aufgebrachte Keramikschicht handelt. Insgesamt läßt sich durch wenig Aufwand eine Kolbenstange herstellen, die über ihre gesamte Länge den gleichen Durchmesser hat. Es muß nicht an irgendeiner Stelle - die Nuten und Plateaus ausgemittelt - mehr Material der Schutzschicht auf- oder abgetragen werden als an einer anderen Stelle.

Vorteilhafte Ausgestaltungen eines erfindungsgemäßen Druckmittelzylinders kann man den Unteransprüchen entnehmen.

Ein irreguläres Muster der Codeelemente erhält man gemäß Patentanspruch 2 vorteilhafterweise dadurch, daß sich die Codespur auf der Kolbenstange aus durch jeweils gleich viele binäre Codeelemente gebildeten Codeworten zusammensetzt, die alle einen aus einer bestimmten Anzahl von Codeelementen gebildeten Startcode und daran anschließend einen individuellen, aus einer nur dem jeweiligen Codewort eigene Folge von Codeelementen bestehenden Positionscode aufweisen, daß sich die Anordnung der Sensorelemente des Sensors wenigstens über die Länge eines ganzen Codewortes erstreckt und daß die Anzahl der Sensorelemente innerhalb der Länge eines Codewortes mindestens so groß wie die Anzahl der Codeelemente der Codeworte ist.

Die Abtastung der Codespur wird besonders genau, wenn gemäß Patentanspruch 3 die Anzahl der Sensorelemente innerhalb einer bestimmten Länge der Codespur nicht genau gleich der Anzahl der Codeelemente, sondern ein ganzzahliges Vielfaches der Anzahl der Codeelemente innerhalb der Länge ist. Als vorteilhaft hat es sich hier auch im Hinblick auf die notwendige Anzahl der Sensorelemente erwiesen, zwei Sensorelemente pro Codeelement vorzusehen.

Gemäß Patentanspruch 5 ist die Reihe der Sensorelemente mindestens so lang wie ein Codewort plus ein Startcode, kann sich also über insgesamt zwei Startcodes und einen Positionscode erstrecken. Damit ist eine Auflösung nicht nur auf eine Codewortlänge, sondern bis zur Breite eines Codeelements herab möglich. Vorzugsweise ist jedoch die Reihe der Sensorelemente länger als ein Codewort plus ein Startcode und beträgt insbesondere 130% eines Codewortes, was aufgrund der Redundanz zusätzliche Möglichkeiten für die Überwachung der Codespur und für die Korrektur von Fehlern und damit für die Erhöhung der Betriebssicherheit eröffnet.

Grundsätzlich können die Codeworte auch bei gleicher Anzahl der Codeelemente pro Startcode verschiedene Startcodes haben. Einfacher erscheint es jedoch, wenn gemäß Patentanspruch 7 der Startcode für alle Codeworte gleich ist.

Gemäß Patentanspruch 8 ist nur der Positionscode eines Codewortes ein Manchester Code, so daß sich der Startcode durch mindestens drei unmittelbar aufeinanderfolgende Codeelemente gleichen Zustands deutlich von der Codeelementfolge innerhalb eines Positionscodes unterscheiden läßt.

Die Sensorelemente sind gemäß Patentanspruch 9 vorteilhafterweise Hallelemente, die dem Feld eines Dauermagneten, insbesondere aus dem Seltene Erden Metall Neodym ausgesetzt sind. Weitere vorteilhafte Ausgestaltungen hinsichtlich des Sensors finden sich in den Patentansprüchen 10 und 11.

Zur weiteren Erhöhung der Betriebssicherheit können, wie in Patentanspruch 12 beschrieben, mehrere Sensoren verteilt um die Kolbenstange herum angeordnet sein.

Ein Ausführungsbeispiel eines erfindungsgemäßen Druckmittelzylinders ist in den Zeichnungen dargestellt. Anhand der Figuren dieser Zeichnungen wird die Erfindung nun näher erläutert.

Es zeigen
- Figur 1: eine perspektivische Teilansicht des Druckmittelzylinders,

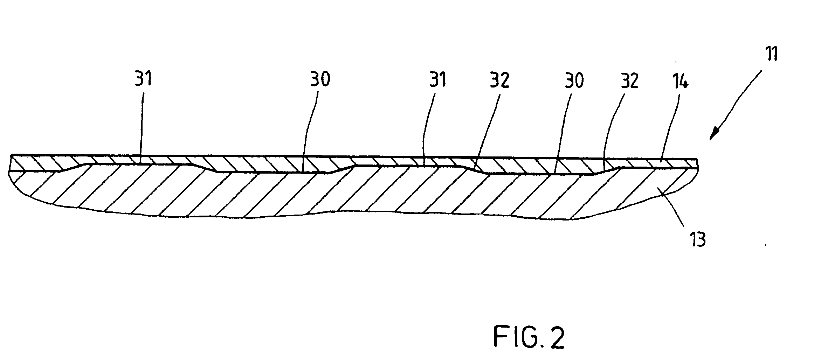

- Figur 2: einen Teillängsschnitt durch die Kolbenstange des Druckmittelzylinders aus Figur 1,
- Figur 3: ein einen Startcode und einen Positionscode aufweisendes Codewort der Codespur auf der Kolbenstange, wobei die Dualzahl des Positionscodes im Manchester Code dargestellt ist,
- Figur 4: ein zweites Codewort der Codespur,

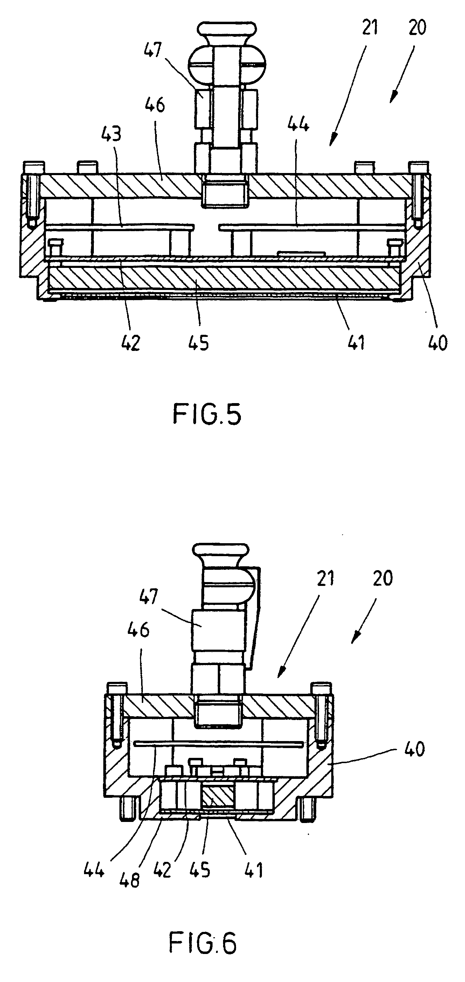

- Figur 5: einen Schnitt in Längsrichtung der Kolbenstange durch das Gehäuse des Sensors,
- Figur 6: einen Querschnitt durch das Gehäuse des Sensors und
- Figur 7: schematisch die Zuordnung zwischen den Sensorelementen und den Codeelementen der Codespur in einer bestimmten Position der Kolben stange.

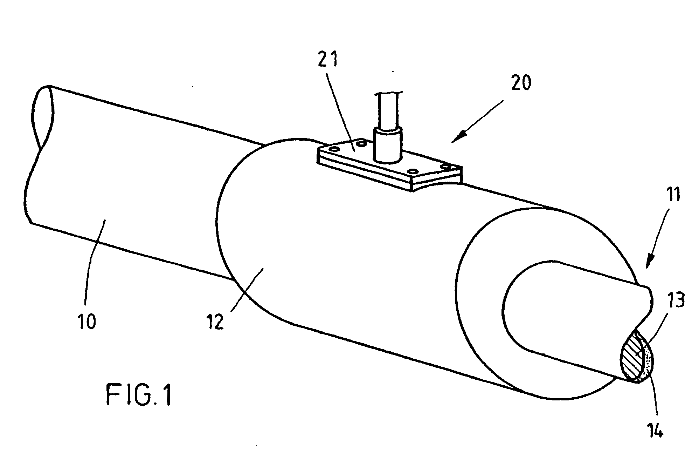

Der Druckmittelzylinder nach Figur 1 besitzt ein Zylindergehäuse 10, in dem sich in allgemein bekannter Weise ein nicht näher dargestellter Kolben befindet. An diesem ist eine Kolbenstange 11 befestigt, die durch einen Zylinderkopf 12 aus dem Inneren des Zylindergehäuses abgedichtet nach außen tritt. Die Kolbenstange besteht überwiegend aus einem Stahlkern 13, der, wie es zum Beispiel aus der DE 39 10 725 C1 oder aus dem US-Patent 5 077 139 bekannt ist, mit einer dünnen keramischen und damit nicht magnetisierbaren Schutzschicht 14 beschichtet ist. Diese ist zum Beispiel durch Flammspritzen von keramischem Pulver aufgebracht.

In den Zylinderkopf 12 ist ein Sensor 20 mit einem Gehäuse 21 eingesetzt, der der Erfassung der absoluten Position der Kolbenstange 11 dient. Der Sensor befindet sich vor der Dichtanordnung zwischen der Kolbenstange und dem Zylinderkopf und wird somit nicht von Druck beaufschlagt.

Zur Positionserfassung ist der Stahlkern 13 der Kolbenstange 11 mit einer längs der Kolbenstange verlaufenden Codespur versehen, deren binäre Codeelemente durch in Radialebenen umlaufende Nuten 30 und umlaufende Stege oder Plateaus 31 gebildet sind. An den Plateaus ist der Durchmesser des Stahlkerns 13 maximal. Die Tiefe der Nuten beträgt demgegenüber etwa 0,3 mm. Die Nuten und die Plateaus haben die gleiche Breite von 5,2 mm, wobei unmittelbar aufeinanderfolgende Nuten oder Plateaus als Nut oder Plateau mit einer Breite erscheinen, die ein ganzzahliges Vielfaches der Teilung von 5,2 mm ist. Die Nuten und die Plateaus gehen in kegelstumpfförmigen Flanken 32 ineinander über, deren Maß in Längsrichtung der Kolbenstange 1 mm beträgt, wobei eine Flanke als zur Hälfte zu einem Plateau 31 und zur anderen Hälfte zu einer Nut 30 gehörig angesehen werden kann. Theoretisch kann man die Codespur als Rechteckprofil mit den erwähnten 5,2 mm als Schrittweite ansehen. Durch die Flanken wird erreicht, daß sich die Dicke der keramischen Schutzschicht 14 nicht abrupt, sondern allmählich ändert, so daß die Gefahr von Rißbildung vermindert ist. Im übrigen liegt die Dicke der Schutzschicht 14 in den Bereichen maximalen Durchmessers des Stahlkerns 13 bei etwa 0,2 bis 0,3 mm und im Bereich der Nuten 30 bei etwa 0,5 bis 0,6 mm.

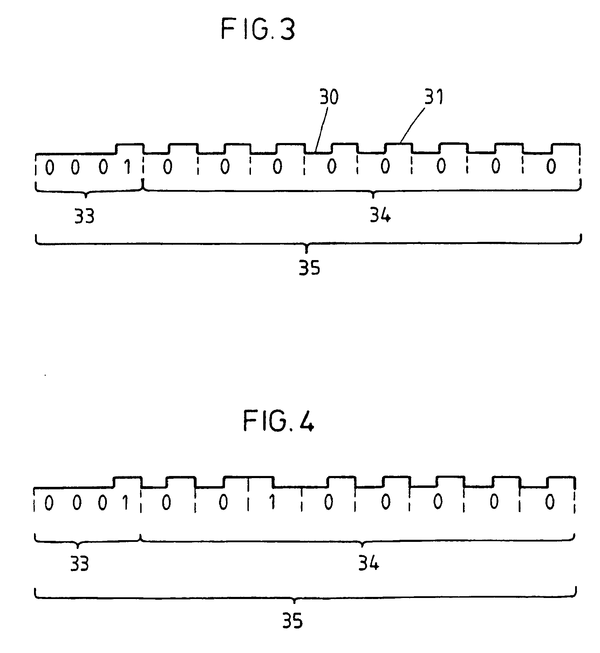

Die Nuten 30 und die Plateaus 31 sind zu binäre Codeworten 35 zusammengefaßt, die aus einem für alle Codeworte gleichen Startcode 33 mit der Codierung 0001 und einem von Codewort zu Codewort unterschiedlichen Positionscode 34 bestehen. Die Positionscodes sind binäre Manchester Codes mit acht Doppelbits und aus den fortlaufenden Dezimalzahlen 0 bis 255 abgeleitet. Ein Doppelbit 01 im Manchester Code bedeutet die Ziffer 0 und ein Doppelbit 10 im Manchester Code die Ziffer 1 einer Dualzahl. Daraus ergibt sich, daß im Manchester Code höchstens zwei aufeinanderfolgende Codeelemente gleichen Zustands auftreten können. Beispielsweise für das Codewort 0 ergibt sich dann die in Figur 3 dargestellte Abfolge von Nuten 30 und Plateaus 31, wobei eine Nut für die binäre 0 und ein Plateau für die binäre 1 steht. Im Startcode 33 folgen die Codeelemente 0001 aufeinander. Dem Startcode 33 folgt der wesentlich längere Positionscode 34 mit den acht gleichen Doppelbits 01. Im Positionscode des Codeworts 0 wechseln sich also Nuten 30 und Plateaus 31 ab. Unterhalb des Profils des Positionscodes 34 ist die Dezimalzahl 0 als Dualzahl 00000000 dargestellt. Beispielsweise für das Codewort gemäß der Dezimalzahl 4 ergibt sich die in Figur 4 dargestellte Reihenfolge von Nuten 30 und Plateaus 31. Man sieht, daß in dem Codewort gemäß Figur 4 einmal zwei Plateaus und einmal zwei Nuten aufeinander folgen. Allgemein läßt sich sagen, daß im Manchester Code höchstens zwei Codeelemente gleichen Zustands, also höchstens zwei binäre Nullen oder zwei binäre Einsen aufeinander folgen. Davon läßt sich ein Startcode leicht unterscheiden, wenn diesem drei Codeelemente gleichen Zustands aufeinander folgen. Andere mögliche Startcodes sind zum Beispiel 001110 oder 000111 oder das Inverse davon.

Durch die Wahl von genau drei aufeinanderfolgenden Codeelementen gleichen Zustands im Startcode und in erster Linie durch die Wahl des Manchester Codes für den gegenüber dem Startcode längeren Positionscode wird erreicht, daß der Stahlkern 13 der Kolbenstange über seine gesamte Länge den gleichen gemittelten Durchmesser hat. Dies führt bei im Mittel gleicher Dicke der Schutzschicht 14 mit relativ geringem Herstellungsaufwand auch zu einer Kolbenstange, die über ihre gesamte Länge den gleichen Durchmesser hat, so daß die Abdichtung im Zylinderkopf einfach ist.

Jedes Codewort besteht, wie dargelegt, aus 20 Codeelementen, die sich in Längsrichtung der Kolbenstange 11 alle über das Maß von 5,2 mm erstrecken. Ein Codewort hat somit eine Länge von 104 mm. Bei 256 Codeworten ergibt sich eine codierte Kolbenstangenlänge von 26,624 m.

Das Gehäuse 21 des Sensors 20 besteht aus einem aus Aluminium hergestellten kastenförmigen Bodenteil 40, in dem mehrere Elektronikkarten 41, 42, 43 und 44 und ein stabförmiger Dauermagnet 45 untergebracht sind, sowie aus einem Stahldeckel 46, der einen elektrischen Stecker 47 trägt und als magnetische Abschirmung gegen äußere magnetische Störungen dient. Das Bodenteil 40, das einen möglichst dünnen Boden 48 von zum Beispiel 0,5 mm Stärke hat und aus Aluminium hergestellt ist, bewirkt keine magnetische Abschirmung, ist jedoch im Zylinderkopf 12 versenkt, der als Abschirmung dient. Der Dauermagnet ist ein Neodymmagnet und erstreckt sich in Längsrichtung der Kolbenstange 11, wenn der Sensor am Druckmittelzylinder befestigt ist.

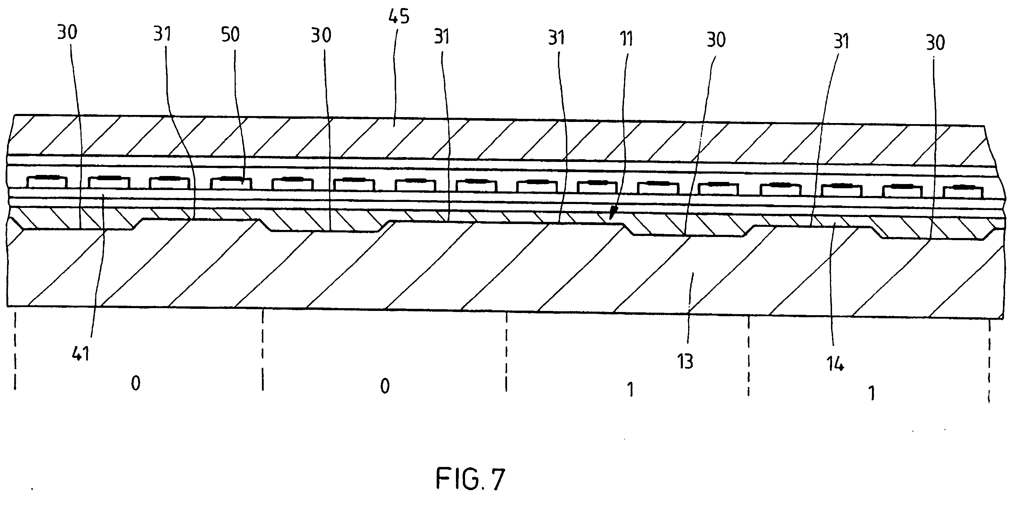

Die Codespur auf der Kolbenstange 11 wird von insgesamt zweiundfünfzig als Hallelemente ausgebildeten Sensorelementen 50 abgetastet, die in einer oder zwei gegeneinander versetzten Reihen auf der zwischen dem Dauermagneten 45 und dem Boden 48 liegenden Karte 41 unterhalb des Dauermagneten und in Gebrauchslage möglichst nahe an der Kolbenstange angeordnet sind, damit der Unterschied in der Feldstärke über einer Nut und über einem Plateau möglichst groß wird. Der Abstand der Hallelemente 50 voneinander in Längsrichtung der Kolbenstange beträgt 2,6 mm. Somit sind, wie in Figur 7 gezeigt, jeweils zwei Sensorelemente einem Codeelement 30 bzw. 31 zugeordnet. Für die Abtastung der zwanzig bits eines Codewortes werden vierzig Hallelemente 50 benötigt, was eine Redundanz von zwölf Hallelementen und von 30% ergibt. Dieser Redundanz ermöglicht es, außer einem ganzen Codewort drei weiter Manchester Doppelbits oder einen Startcode und ein weiteres Manchester Doppelbit abzutasten.

Auf der Karte 41 befinden sich auch Multiplexer zur Abfrage der Hallelemente. Die Karte 42 trägt AD-Converter und Microcontroller. Die Karte 43 sorgt für die Regelung der Versorgungsspannung auch der Hallelemente. Die Karte 44 schließlich ist eine CAN-bus Karte.

Im Betrieb kann durch Benutzung der zweiundfünfzig Hallelemente 50 das Muster der Nuten 30 und der Plateaus 31 bestimmt werden. Da die Kolbenstange 11 mit einem Satz von eindeutigen Codeworten versehen ist, kann die Absolutposition der Kolbenstange durch Ablesen des Codewortes erkannt werden. Jedes Codewort ist 104 mm lang, so daß die Bestimmung des Wortes, über dem die Reihe der Hallelemente positioniert ist, die Absolutposition in Teilen von 104 mm ergibt. Darüber hinaus kann durch Nutzung des Startcodes 33 eines Codewortes die Absolutposition bis auf Bitbreite bestimmt werden, was eine Auflösung von 5,2 mm ergibt. Die Auflösung kann weiter verbessert werden, wenn die Position der Übergänge von 0 zu 1 und von 1 zu 0 zwischen den Nuten und Plateaus bestimmt wird durch Interpolation über die Übergänge, die von der Reihe der Hallelemente erfaßt werden. Dadurch ist eine Auflösung bis zu 0,3 mm möglich.

## Patentansprüche

1. Druckmittelzylinder mit einem eine Kolbenstange (11) aufweisenden Kolben und mit eine Meßsystem zur Bestimmung der Position der Kolbenstange (11) bezüglich eines Bezugspunkts, wobei das Meßsystem eine auf die Kolbenstange (11) aufgebrachte, längs der Kolbenstange (11) verlaufende Codespur von binären Codeelementen (30, 31), die durch in Umfangsrichtung verlaufende Nuten (30) und Plateaus (31) in einem magnetisch leitfähigen und mit einer Schutzschicht (14) überzogenen Grundmaterial (13) der Kolbenstange (11) gebildet sind, und einen retativ zum Bezugspunkt ortsfesten Sensor (20) aufweist, der mehrere längs der Codespur angeordnete und jeweils eine begrenzte Anzahl von Codeelementen (30, 31) abtastende Sensorelemente (50) aufweist,
**dadurch gekennzeichnet, daß** zur Bestimmung der Absolutposition der Kolbenstange (11) die Codeelemente (30, 31) in der Codespur auf der Kolbenstange (11) in einem irregulären Muster angeordnet sind, das für verschiedene Positionen der Kolbenstange jeweils ein einzigartiges Muster der Ausgangssignale der Sensorelemente (50) erzeugt und daß die Nuten (30) und Plateaus (31) in der Kolbenstange zumindest in weiten Bereichen einen Manchester Code bilden, bei dem höchstens zwei Codeelemente (30, 31) gleichen Zustands aufeinander folgen.

2. Druckmittelzylinder nach Anspruch 1, **dadurch gekennzeichnet, daß** sich die Codespur auf der Kolbenstange (11) aus durch jeweils gleich viele binäre Codeelemente (30, 31) gebildeten Codeworten (35) zusammensetzt, die alle einen aus einer bestimmten Anzahl von Codeelementen (30, 31) gebildeten Startcode (33) und daran anschließend einen individuellen, aus einer nur dem jeweiligen Codewort (35) eigene Folge von Codeelementen (30, 31 ) bestehenden Positionscode (34) aufweisen, daß sich die Anordnung der Sensorelemente (50) des Sensors (20) wenigstens über die Länge eines ganzen Codewortes (35) erstreckt und daß die Anzahl der Sensorelemente (50) innerhalb der Länge eines Codewortes (35) mindestens so groß wie die Anzahl der Codeelemente (30, 31) der Codeworte (35) ist.

3. Druckmittelzylinder nach Anspruch 1 oder 2, **dadurch gekennzeichnet, daß** die Anzahl der Sensorelemente (50) innerhalb einer bestimmten Länge der Codespur ein ganzzahliges Vielfaches der Anzahl der Codeelemente (30, 31) innerhalb der Länge ist.

4. Druckmittelzylinder nach Anspruch 3, **dadurch gekennzeichnet, daß** innerhalb der bestimmten Länge doppelt so viele Sensorelemente (50) wie Codeelemente (30, 31) vorhanden sind, der Abstand zwischen den Sensorelementen (50) also halb so groß wie zwischen den Codeelementen (30, 31) ist.

5. Druckmittelzylinder nach Anspruch 2, 3 oder 4, **dadurch gekennzeichnet, daß** die Reihe der Sensorelemente (50) mindestens so lang wie ein Codewort (35) plus ein Startcode (33) ist.

6. Druckmittelzylinder nach Anspruch 5, **dadurch gekennzeichnet, daß** die Reihe der Sensorelemente (50) länger als ein Codewort (35) plus ein Startcode (33) ist, vorzugsweise 130% eines Codewortes (35) beträgt.

7. Druckmittelzylinder nach einem der Ansprüche 2 bis 6, **dadurch gekennzeichnet, daß** der Startcode (33) für alle Codeworte (35) auf der Codespur der Kolbenstange (11) gleich ist.

8. Druckmittelzylinder nach einem der Ansprüche 2 bis 7, **dadurch gekennzeichnet, daß** nur der Positionscode (34) ein Manchester Code ist und daß der Startcode (33) mindestens drei unmittelbar aufeinander folgende Codeelemente (30) gleichen Zustands aufweist.

9. Druckmittelzylinder nach einem vorhergehenden Anspruch, **dadurch gekennzeichnet, daß** die Sensorelemente (50) Hallelemente sind, die dem Feld eines Dauermagneten (45), der insbesondere aus dem Seltene Erden Metall Neodym besteht, ausgesetzt sind.

10. Druckmittelzylinder nach Anspruch 9, **dadurch gekennzeichnet, daß** ein Gehäuse (21) mit den Sensorelementen (50) und der zugehörigen Elektronik im Zylinderkopf (12) angeordnet ist.

11. Druckmittelzylinder nach Anspruch 10, **dadurch gekennzeichnet, daß** das Gehäuse (21) ein Bodenteil (40) aus Aluminium, in das die Sensorelemente (50), der Dauermagnet (45) und diverse elektrische Leiterplatten (41, 42, 43, 44) eingesetzt sind, und einen Deckel (46) aus Stahl aufweist.

12. Druckmittelzylinder nach einem vorhergehenden Anspruch, **dadurch gekennzeichnet, daß** mehrere Sensoren verteilt um die Kolbenstange herum angeordnet sind.

## Claims

1. A pressure-medium cylinder having a piston which has a piston rod (11), and having a measuring system for determining the position of the piston rod (11) relative to a reference point, with the measuring system having a code track of binary code elements (30, 31) which is applied to the piston rod (11) and runs along the piston rod (11), which code elements (30, 31) are formed by grooves (30) and plateaus (31) which run in the circumferential direction in a magnetically. conductive base material (13), which is coated with.a protective layer (14), of the piston rod (11), and with the measuring system having a sensor (20) which is in a fixed position relative to the reference point and has a plurality of sensor elements (50), which are arranged along the code track and each scan a limited number of code elements (30, 31), **characterized in that**, in order to determine the absolute position of the piston rod (11), the code elements (30, 31) in the code track on the piston rod (11) are arranged in an irregular pattern, which in each case produces a unique pattern of the output signals from the sensor elements (50) for different positions of the piston rod, and **in that** the grooves (30) and plateaus (31) in the piston rod form, at least in wide areas, a Manchester Code, in which at most two code elements (30, 31) of the same state follow one another.

2. A pressure-medium cylinder according to claim 1, **characterized in that** the code track on the piston rod (11) is composed of code words (35) which are each formed from an equal number of binary code elements (30, 31) and which all have a start code (33), which is formed from a specific number of code elements (30, 31), and, following this, an individual position code (34), which comprises a sequence of code elements (30, 31) which is specific only to that particular code word (35), **in that** the arrangement of the sensor elements (50) of the sensor (20) extends at least over the length of an entire code word (35), and **in that** the number of sensor elements (50) within the length of a code word (35) is at least as great as the number of code elements (30, 31) in the code words (35).

3. A pressure-medium cylinder according to claim 1 or 2, **characterized in that** the number of sensor elements (50) within a specific length of the code track is an integer multiple of the number of code elements (30, 31) within the length.

4. A pressure-medium cylinder according to claim 3, **characterized in that** there are twice as many sensor elements (50) as code elements (30, 31) within the specific length, and the distance between the sensor elements (50) is thus half as great as that between the code elements (30, 31).

5. A pressure-medium cylinder according to claim 2, 3 or 4, **characterized in that** the row of sensor elements (50) is at least as long as one code word (35) plus one start code (33).

6. A pressure-medium cylinder according to claim 5, **characterized in that** the row of sensor elements (50) is longer than one code word (35) plus one start code (33), and is preferably 130% of one code word (35).

7. A pressure-return cylinder according to any of claims 2 to 6, **characterized in that** the start code (33) is the same for all the code words (35) on the code track on the piston rod (11).

8. A pressure-medium cylinder according to any of claims 2 to 7, **characterized in that** only the position code (34) is a Manchester Code, and **in that** the start code (33) has at least three immediately successive code elements (30) of the same state.

9. A pressure-medium cylinder according to any of the preceding claims, **characterized in that** the sensor elements (50) are Hall elements, which are subjected to the field from a permanent magnet (45) which, in particular, is composed of the rare earth metal neodymium.

10. A pressure-medium cylinder according to claim 9, **characterized in that** a housing (21) together with the sensor elements (50) and the associated electronics are arranged in the cylinder head (12).

11. A pressure-medium cylinder according to claim 10,
**characterized in that** the housing (21) has a base part (40) made of aluminium, into which the sensor elements (50), the permanent magnet (45) and various electrical printed circuit boards (41, 42, 43, 44) are inserted, and has a cover (46) made of steel.

12. A pressure-medium cylinder according to any of the preceding claims, **characterized in that** a plurality of sensors are arranged distributed around the piston rod.

## Revendications

1. Un vérin à fluide de pression, doté d'un vérin présentant une tige (11) de vérin et doté d'un système de mesure pour déterminer la position de la tige (11) de vérin par rapport à un point de référence, cependant que le système de mesure présente une piste codée, qui est disposée sur la tige (11) de vérin, qui évolue le long de la tige (11) de vérin et qui est constituée d'éléments (30, 31) de code binaires, lesquels sont formés par des rainures (30) et des plateaux (31) disposés dans le sens de la périphérie dans un matériau (13) de base, conducteur magnétique et recouvert d'une couche protectrice (14), de la tige (11) de vérin, ainsi qu'un capteur (20), qui est fixe par rapport au point de référence et qui présente plusieurs éléments (50) de capteur, disposés le long de la piste codée et analysant, à un instant donné, un nombre limité d'éléments (30, 31) de code,
**caractérisé en ce que** les éléments (30, 31) de code sont disposés dans la piste codée sur la tige (11) de vérin selon un schéma irrégulier, qui produit un schéma de signaux de sortie des éléments (50) de capteur unique pour chacune des différentes positions de la tige de vérin, afin de déterminer la position absolue de la tige (11) de vérin, et que les rainures (30) et les plateaux (31) forment sur la tige de vérin, au moins sur de larges zones, un code côtelé, présentant un maximum dé deux éléments (30, 31) de code consécutifs du même état.

2. Un vérin à fluide de pression selon la revendication n° 1, **caractérisé en ce que** la piste codée sur la tige (11) de vérin est constituée de mots (35) de code, qui tous sont formés d'un même nombre d'éléments (30, 31) de code binaires chacun, qui tous présentent un code (33) de départ, constitué d'un nombre d'éléments (30, 31) de code donné, et, de façon consécutive, d'un code (34) de position individuel, constitué d'une suite d'éléments (30, 31) de code propre à chaque mot (35) de code, que la disposition des éléments (50) de capteur'du capteur (20) s'étend au moins sur la longueur de la totalité d'un mot (35) de code et que le nombre d'éléments (50) de capteur sur l'étendue d'un mot (35) de code est au moins égal au nombre d'éléments (30, 31) de code des mots (35) de code.

3. Un vérin à fluide de pression selon la revendication n° 1 ou n° 2, **caractérisé en ce que** le nombre d'éléments (50) de capteur compris sur une longueur de piste codée donnée est un multiple entier du nombre d'éléments (30, 31) de code présents sur la longueur.

4. Un vérin à fluide de pression selon la revendication n° 3, **caractérisé en ce qu'**il y a deux fois plus d'éléments (50) de capteur que d'éléments (30, 31) de code sur la longueur donnée, c'est à dire que la distance séparant les éléments (50) de capteur correspond à la moitié de celle séparant les éléments (30, 31) de code.

5. Un vérin à fluide de pression selon la revendication n° 2, n° 3 ou n° 4, **caractérisé en ce que** la suite d'éléments (50) de capteur est au moins aussi longue qu'un mot (35) de code plus un code (33) de départ.

6. Un vérin à fluide de pression selon la revendication n° 5, **caractérisé en ce que** la suite d'éléments (50) de capteur est plus longue qu'un mot (35) de code plus un code (33) de départ et, de préférence, correspond à 130 % d'un mot (35) de code:

7. Un vérin à fluide de pression selon une des revendications n° 2 à n° 6, **caractérisé en ce que** le code (33) de départ est identique pour tous les mots (35) de code sur la piste codée de la tige (11) de vérin.

8. Un vérin à fluide de pression selon une des revendications n° 2 à n° 7, **caractérisé en ce qu'**exclusivement le code (34) de position est un code côtelé et que le code (33) de départ présente au moins trois éléments (30) de code du même état consécutifs.

9. Un vérin à fluide de pression selon une des revendications précédentes, **caractérisé en ce que** les éléments (50) de capteur sont des éléments Hall, qui sont soumis au champ d'un aimant (45) permanent, en particulier constitué du métal des terres rares Néodyme.

10. Un vérin à fluide de pression selon la revendication n° 9, **caractérisé en ce qu'**un corps (21) doté des éléments (50) de capteur et de l'électronique correspondante est disposé dans la tête (12) de vérin.

11. Un vérin à fluide de pression selon la revendication n° 10, **caractérisé en ce que** le corps (21) présente un élément de fond (40) constitué d'aluminium, dans lequel sont disposés les éléments (50) de capteur, l'aimant (45) permanent et différentes plaques (41, 42, 43, 44) conductrices, ainsi qu'un couvercle (46) en acier.

12. Un vérin à fluide de pression selon une revendication précédente, **caractérisé en ce que** plusieurs capteurs sont disposés, de façon répartie, tout autour de la tige de vérin.
